# EUROPEAN PATENT APPLICATION

(11) **EP 4 395 020 A2**
(43) Date of publication of application: **03.07.2024**
(21) Application number: 23175539.8
(22) Date of filing: 26.05.2023
(51) Int. Cl.: H01M 50/107, H01M 50/119, H01M 50/179, H01M 50/191, H01M 50/559

(54) **BATTERY**

(30) Priority: 30.12.2022 CN 202211733909
(71) Applicant: CALB Group Co., Ltd., Changzhou City, Jiangsu Province (CN)
(72) Inventor: LU, Jingjia, Changzhou City, Jiangsu Province (CN); SUN, Qianqian, Changzhou City, Jiangsu Province (CN); ZHANG, Lulu, Changzhou City, Jiangsu Province (CN)
(74) Representative: Becker, Eberhard

(57) **Abstract**

Provided is a battery, including: a battery case (10), a terminal post (20), and a rigid sealing member (30). The terminal post (20) is arranged in a terminal post (20) through hole (11) on the battery case (10). A glass transition temperature of the rigid sealing member (30) is 300°C to 600°C. The rigid sealing member (30) is at least partially arranged in the terminal post (20) through hole (11) to seal the terminal post (20) and the battery case (10). A distance a between a first endpoint (12) and a wall of a terminal post (20) through hole (11) along an extending direction of a first connecting line and a distance b between a second endpoint (13) and the wall of the terminal post (20) through hole (11) along an extending direction of a second connecting line satisfies 0.9≤a/b≤1.1.

## Description

### Technical Field

The disclosure relates to the technical field of batteries, and particularly to a battery.

### Background

In related technologies, a rubber member may be used to seal between a terminal post and a battery case of a battery. However, after long-term use, the rubber member is prone to failure. Other types of sealing structures, though available, cannot achieve a good sealing effect.

As a type of sealing structure, glass seal can ensure a good sealing effect. However, limited by structural characteristics, glass seal has never been used in the battery field.

### Summary

The disclosure provides a battery to improve the service performance of the battery.

The disclosure provides a battery, including:
a battery case, where a terminal post through hole is arranged on the battery case;
a terminal post, where the terminal post is arranged in the terminal post through hole; and
a rigid sealing member, where a glass transition temperature of the rigid sealing member is 300°C to 600°C, and the rigid sealing member is at least partially arranged in the terminal post through hole to seal the terminal post and the battery case,
where, a circumferential outer edge of a surface of the battery case provided with the terminal post through hole has a first endpoint and a second endpoint, a center point of the terminal post through hole forms a first connecting line and a second connecting line respectively with the first endpoint and the second endpoint, the first connecting line is substantially perpendicular to the second connecting line, a distance between the first endpoint and a hole wall of the terminal post through hole along an extending direction of the first connecting line is defined as a, a distance between the second endpoint and the hole wall of the terminal post through hole along an extending direction of the second connecting line is defined as b, and 0.9≤a/b≤1.1.

### Brief Description of The Drawings

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views. In the drawings:
FIG. 1 is a schematic structural diagram of a battery according to an example embodiment;
FIG. 2 is a partial schematic structural cross-sectional view of a battery according to an example embodiment;
FIG. 3 is a partial schematic structural diagram of a battery according to an example embodiment; and
FIG. 4 is a partial schematic structural diagram of a battery according to another example embodiment.

### List of reference numerals:

10: battery case; 11: terminal post through hole; 111: center point; 12: first endpoint; 13: second endpoint; 14: first case member; 15: second case member; 20: terminal post; 30: rigid sealing member.

### Description Of the Embodiments

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the disclosure can be understood according to the specific situation.

Further, in the description of the disclosure, it should be understood that spatially relative terms, such as "above", "below" "inside", "outside" and the like, are described based on orientations illustrated in the figures, but are not intended to limit the exemplary embodiments of the disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

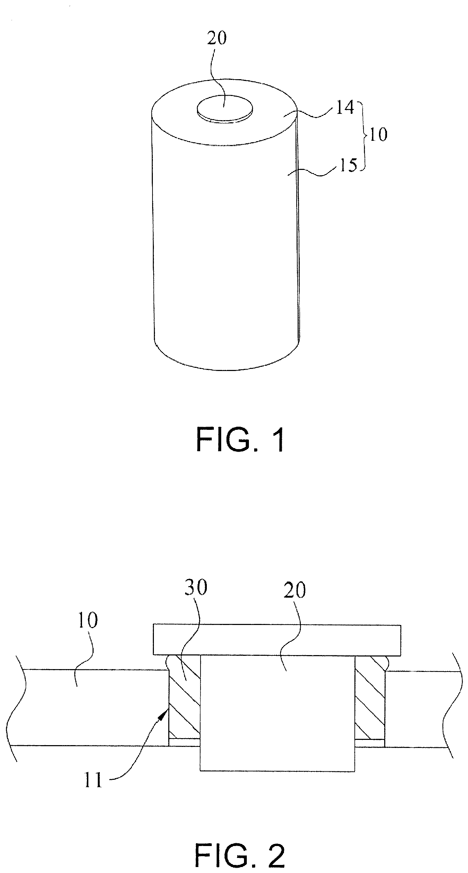

One embodiment of the disclosure provides a battery. Referring to FIG. 1 to FIG. 4, the battery includes: a battery case 10, where a terminal post through hole 11 is arranged on the battery case 10; a terminal post 20, where the terminal post 20 is arranged in the terminal post through hole 11; and a rigid sealing member 30, where a glass transition temperature of the rigid sealing member 30 is 300°C to 600°C, and the rigid sealing member 30 is at least partially arranged in the terminal post through hole 11 to seal the terminal post 20 and the battery case 10. A circumferential outer edge of a surface of the battery case 10 provided with the terminal post through hole 11 has a first endpoint 12 and a second endpoint 13. A center point 111 of the terminal post through hole 11 forms a first connecting line and a second connecting line respectively with the first endpoint 12 and the second endpoint 13. The first connecting line is substantially perpendicular to the second connecting line. A distance between the first endpoint 12 and a hole wall of the terminal post through hole 11 along an extending direction of the first connecting line is defined as a, a distance between the second endpoint 13 and the hole wall of the terminal post through hole 11 along an extending direction of the second connecting line is defined as b, and 0.9≤a/b≤1.1.

A battery of one embodiment of the disclosure includes a battery case 10, a terminal post 20, and a rigid sealing member 30. The terminal post 20 is arranged in a terminal post through hole 11 on the battery case 10, and the rigid sealing member 30 is at least partially arranged in the terminal post through hole 11. In this way, the terminal post 20 and the battery case 10 can be effectively sealed. Since the rigid sealing member 30 has a high hardness, problems such as compression deformation failure can be avoided, so that the sealing performance of the rigid sealing member 30 between the terminal post 20 and the battery case 10 can be improved. A circumferential outer edge of a surface of the battery case 10 provided with the terminal post through hole 11 has a first endpoint 12 and a second endpoint 13. A center point 111 of the terminal post through hole 11 forms a first connecting line and a second connecting line respectively with the first endpoint 12 and the second endpoint 13. The first connecting line is substantially perpendicular to the second connecting line. A distance between the first endpoint 12 and a hole wall of the terminal post through hole 11 along an extending direction of the first connecting line is defined as a, a distance between the second endpoint 13 and the hole wall of the terminal post through hole 11 along an extending direction of the second connecting line is defined as b, and 0.9≤a/b≤1.1. Therefore, the distances between the first endpoint 12 and the second endpoint 13 and the rigid sealing member 30 are relatively uniform, to ensure that the battery case 10 can provide relatively balanced compression force to the rigid sealing member 30, thereby avoiding the risk of failure of the rigid sealing member 30 and improving the safety performance of the battery set.

It should be noted that, in related technologies, a rubber member may be used to seal between a terminal post and a battery case of a battery, and after long-term use, the rubber member deforms due to aging, leading to sealing failure and other problems. In this embodiment, the use of the rigid sealing member 30 to seal the terminal post 20 and the battery case 10 can ensure that the rigid sealing member 30 effectively seals the terminal post 20 and the battery case 10 at the initial stage of use. In addition, the rigid sealing member 30 is not prone to problems such as aging after long-term use of the battery, thereby avoiding the problem of sealing failure between the terminal post 20 and the battery case 10 due to the change of the structural performance of the rigid sealing member 30.

As the rigid sealing member 30 has a high hardness, the rigid sealing member 30 is not prone to problems such as aging. Correspondingly, the mechanical impact resistance of the rigid sealing member 30 may be relatively low. Therefore, it is necessary to avoid the problem of excessive and uneven stress on the rigid sealing member 30. In this embodiment, the first endpoint 12 and the second endpoint 13 of the battery case 10 that apply an external force to the rigid sealing member 30 are arranged to be at approximately the same distance from the rigid sealing member 30, so that the problem of excessive and uneven stress on the rigid sealing member 30 can be avoided, thereby preventing the rigid sealing member 30 from cracking under a mechanical impact force to affect the sealing performance of the rigid sealing member 30.

A glass transition temperature of the rigid sealing member 30 is 300°C to 600°C, that is, the temperature at which the rigid sealing member 30 starts to soften is 300°C to 600°C, which is a relatively high temperature. Therefore, the rigid sealing member 30 is not prone to softening, thereby avoiding the problem of sealing failure during the use of the battery.

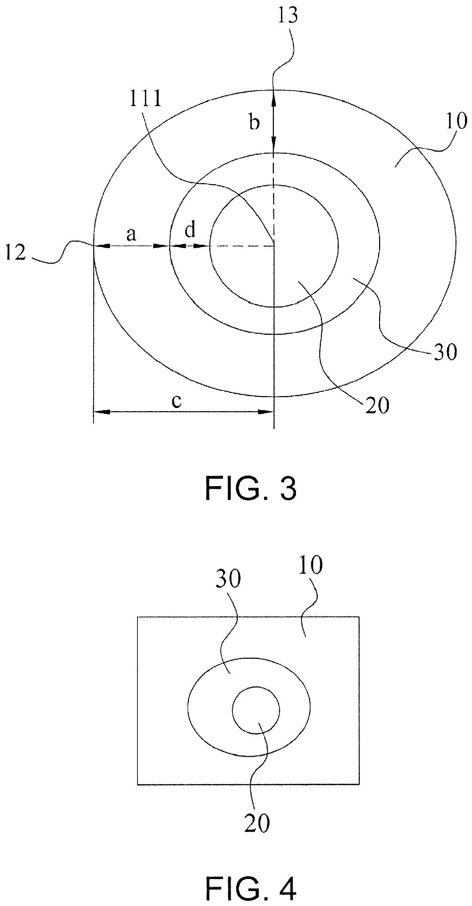

As shown in FIG. 3, the circumferential outer edge of the surface of the battery case 10 provided with the terminal post through hole 11 has the first endpoint 12 and the second endpoint 13. The center point 111 of the terminal post through hole 11 forms the first connecting line and the second connecting line respectively with the first endpoint 12 and the second endpoint 13. The first connecting line is substantially perpendicular to the second connecting line. The first connecting line and the second connecting line are denoted by two dashed lines in FIG. 3. In addition, the distance between the first endpoint 12 and the hole wall of the terminal post through hole 11 along the extending direction of the first connecting line is defined as a, the distance between the second endpoint 13 and the hole wall of the terminal post through hole 11 along the extending direction of the second connecting line is defined as b, and 0.9≤a/b≤1.1. That is, the first endpoint 12 and the second endpoint 13 are at approximately the same distance from the rigid sealing member 30, so the forces applied by the first endpoint 12 and the second endpoint 13 on the rigid sealing member 30 are approximately the same, thereby avoiding problems such as cracking of the rigid sealing member 30 under the forces.

A ratio between the distance a between the first endpoint 12 and the hole wall of the terminal post through hole 11 and the distance b between the second endpoint 13 and the hole wall of the terminal post through hole 11 may be 0.9, 0.91, 0.95, 0.96, 0.97, 0.98, 0.99, 1, 1.01, 1.02, 1.03, 1.04, 1.05, 1.06, 1.07, 1.08, 1.09, 1.1, etc.

The rigid sealing member 30 may be glass, glass-ceramic, ceramic, or other glass- or ceramic-based composite materials, which are not limited herein, to ensure that the rigid sealing member 30 can have a reliable hardness to avoid problems such as aging.

In one embodiment, a is substantially equal to b. That is, the ratio between the distance a between the first endpoint 12 and the hole wall of the terminal post through hole 11 and the distance b between the second endpoint 13 and the hole wall of the terminal post through hole 11 may be 1. Therefore, it can be ensured that the rigid sealing member 30 receives relatively uniform forces, thereby avoiding the problem of fracture of the rigid sealing member 30 under the forces, ensuring the sealing performance of the rigid sealing member 30, and avoiding the problem of sealing failure of the rigid sealing member 30.

It should be noted that in the disclosure, the term "substantially" means that the determination is made on the basis of considering a machining error, an installation error, a measurement error, and the like. If the machining error, the installation error, the measurement error, and the like are ignored, the first connecting line and the second connecting line may be perpendicular, and a and b may be equal.

In one embodiment, the circumferential outer edge of the surface of the battery case 10 provided with the terminal post through hole 11 may further have a third endpoint. The center point 111 of the terminal post through hole 11 forms a third connecting line with the third endpoint. The third connecting line may be on the same straight line as the first connecting line. A distance between the third endpoint and the hole wall of the terminal post through hole 11 along an extending direction of the third connecting line is defined as e, and 0.9≤a/e≤1.1. Further, a/e=1.

In one embodiment, the battery may further include a cell. The cell is arranged in the battery case 10. The cell may be electrically connected to the battery case 10, or the cell may be connected to the terminal post 20 on the battery case 10.

It should be noted that the battery includes a cell and an electrolyte, and is the smallest unit capable of performing an electrochemical reaction such as charging/discharging. The cell is a unit formed by winding or laminating a stack. The stack includes a first electrode plate, a separator, and a second electrode plate. When the first electrode plate is a positive electrode plate, the second electrode plate is a negative electrode plate. The polarities of the first electrode plate and the second electrode plate are interchangeable. The first electrode plate and the second electrode plate are each coated with an active material.

In one embodiment, as shown in FIG. 4, the battery may be a prismatic battery, that is, the battery may be a quadrangular prism battery. The quadrangular prism battery mainly means that the appearance of the battery is of a prism shape, but it is not strictly specified whether each side of the prism must be a straight line in a strict sense. An angle between sides may not be a right angle, but may be a circular are transition.

The battery may be a laminated battery, which can be conveniently formed into a battery module, and can be processed to obtain a battery with a long length. Specifically, the cell is a laminated cell. The cell includes a first electrode plate, a second electrode plate of a polarity opposite to that of the first electrode plate and stacked with the first electrode plate, and a separator arranged between the first electrode plate and the second electrode plate, so that a plurality of pairs of first electrode plates and second electrode plates are stacked to form a laminated cell.

Alternatively, the battery may be a wound battery, that is, the first electrode plate, the second electrode plate of a polarity opposite to that of the first electrode plate, and the separator arranged between the first electrode plate and the second electrode plate are wound to obtain a wound cell.

In one embodiment, as shown in FIG. 1 to FIG. 3, the battery may be a cylindrical battery. The battery may be a wound battery, that is, the first electrode plate, the second electrode plate of a polarity opposite to that of the first electrode plate, and the separator arranged between the first electrode plate and the second electrode plate are wound to obtain a wound cell.

The surface of the battery case 10 provided with the terminal post through hole 11 is a circular surface, the rigid sealing member 30 effectively seals the terminal post 20 and the battery case 10, and the circumferential outer surface of the cylindrical battery can provide relatively uniform impact forces to the rigid sealing member 30, thereby avoiding the problem of fracture of the rigid sealing member 30 caused by an external force, that is, the rigid sealing member 30 receives uniform forces during the sealing process, thereby realizing good sealing and improving the connection strength between the rigid sealing member 30 and the battery case 10.

In one embodiment, a diameter of the cylindrical battery is greater than or equal to 20 mm, to ensure that the cylindrical battery can have a reliable capacity, thereby ensuring the service performance of the cylindrical battery.

In one embodiment, a distance between the center point 111 and the first endpoint 12 is defined as c, a thickness of the rigid sealing member 30 in the terminal post through hole 11 along the extending direction of the first connecting line is defined as d, and 3%≤d/c≤20%. This not only ensures that the rigid sealing member 30 has a reliable structural strength, but also ensures that the terminal post 20 can have a reliable current flow area, thereby ensuring the safe use of the battery.

If a ratio between the thickness d of the rigid sealing member 30 in the terminal post through hole 11 and the distance c between the center point 111 and the first endpoint 12 is less than 3%, the overall strength of the rigid sealing member 30 will be insufficient, affecting the sealing and insulation performance between the terminal post 20 and the battery case 10. If the ratio between the thickness d of the rigid sealing member 30 in the terminal post through hole 11 and the distance c between the center point 111 and the first endpoint 12 is greater than 20%, the current flow area of the terminal post 20 is insufficient, affecting the electron transmission rate of the battery. In this case, an outer end of the battery case 10 is close to the rigid sealing member, leading to impact on the battery case 10, and resulting in the risk of failure of the rigid sealing member 30 within a short time.

As shown in FIG. 3, the distance between the center point 111 and the first endpoint 12 is defined as c, and the thickness of the rigid sealing member 30 in the terminal post through hole 11 along the extending direction of the first connecting line is defined as d.

The ratio between the thickness d of the rigid sealing member 30 in the terminal post through hole 11 and the distance c between the center point 111 and the first endpoint 12 may be 3%, 3.1%, 3.2%, 3.3%, 3.4%, 3.5%, 4%, 4.5%, 5%, 5.5%, 6%, 6.5%, 7%, 7.5%, 8%, 9%, 9.5%, 10%, 11%, 12%, 13%, 14%, 15%, 15.5%, 16%, 17%, 18%, 19%, 19.5%, 19.8%, 19.9%, 20%, etc.

In one embodiment, the rigid sealing member 30 includes glass, ceramic, or glass-ceramic, to avoid aging of the rigid sealing member 30. In addition, problems such as damage to the rigid sealing member 30 can be avoided by controlling the uniformity of forces applied by the battery case 10 to the terminal post 20, thereby ensuring the sealing performance of the rigid sealing member 30.

In one embodiment, the rigid sealing member 30 is an annular sealing structure, to reliably seal the terminal post 20 and the battery case 10 and avoid problems such as sealing failure between the terminal post 20 and the battery case 10.

The terminal post through hole 11 may be a polygonal hole. For example, the terminal post through hole 11 may be a rectangular hole. A circumferential outer surface of the annular sealing structure formed by the rigid sealing member 30 may be rectangular, and the portion of the terminal post 20 located in the terminal post through hole 11 may be a cylindrical structure, a rectangular structure, etc., which is not limited herein.

In one embodiment, the rigid sealing member 30 includes a circular sealing structure. This not only simplifies the structure, but also realizes reliable sealing between the terminal post 20 and the battery case 10. In addition, the circular sealing structure is not prone to stress concentration, and protects the rigid sealing member 30 from structural damage caused by a mechanical impact force, to ensure the structural strength of the rigid sealing member 30, thereby ensuring reliable sealing between the battery case 10 and the terminal post 20 by the rigid sealing member 30.

In one embodiment, as shown in FIG. 1, the battery case 10 includes a first case member 14 and a second case member 15 connected to each other. The first case member 14 is a flat plate, the second case member 15 is formed with an accommodation cavity, and the arrangement of the terminal post through hole 11 on the flat plate not only simplifies the structure, but also facilitates the arrangement of the terminal post 20 on the battery case 10, thereby improving the installation efficiency of the battery.

In one embodiment, the first case member 14 may be formed with an accommodation cavity, the second case member 15 may be formed with an accommodation cavity, and the terminal post 20 may be arranged on the first case member 14 or the second case member 15. Alternatively, there are two terminal posts 20, and the two terminal posts 20 may be arranged on the first case member 14 and the second case member 15 respectively.

It should be noted that the number of terminal posts 20 may be one, the terminal post 20 may be electrically connected to one tab of the cell, and another tab of the cell may be electrically connected to the battery case 10, in which case the battery case 10 may be insulated from the terminal post 20. The number of terminal posts 20 may be two, and the two terminal posts 20 may be arranged on the same side of the battery case 10. For example, the two terminal posts 20 may both be arranged on the flat plate. Alternatively, the two terminal posts 20 may be arranged on two opposite sides of the battery case 10 respectively.

In one embodiment, the battery case 10 is a metal piece, to ensure the structural strength of the battery case 10 and facilitate the installation of the rigid sealing member 30, thereby improving the reliable sealing between the terminal post 20 and the battery case 10 by the rigid sealing member 30.

The battery case 10 may be made of steel, aluminum, copper, or a combination thereof, which is not limited herein.

It should be noted that the first case member 14 and the second case member 15 may be independently arranged. In some embodiments, the first case member 14 and the second case member 15 may be integrally formed, a space for accommodating the cell is formed by stamping, and then a sealed connection is achieved by welding.

In one embodiment, the rigid sealing member 30 is hot-melted in the terminal post through hole 11, to ensure that the rigid sealing member 30 reliably seals the terminal post 20 and the battery case 10, and improve the efficiency of fabrication and installation of the rigid sealing member 30, thereby improving the installation efficiency of the battery.

In one embodiment, the rigid sealing member 30 may be entirely located in the terminal post through hole 11, that is, an upper surface of the rigid sealing member 30 may be lower than an outer surface of the battery case 10, or the upper surface of the rigid sealing member 30 may be even with the outer surface of the battery case 10.

In one embodiment, as shown in FIG. 2, one part of the rigid sealing member 30 may be located inside the terminal post through hole 11, and the other part of the rigid sealing member 30 may be located outside the terminal post through hole 11, so that the sealing performance of the rigid sealing member 30 can be improved.

One embodiment of the disclosure further provides a battery set, including the battery described above.

A battery set of one embodiment of the disclosure includes a battery. The battery includes a battery case 10, a terminal post 20, and a rigid sealing member 30. The terminal post 20 is arranged in a terminal post through hole 11 on the battery case 10, and the rigid sealing member 30 is at least partially arranged in the terminal post through hole 11. In this way, the terminal post 20 and the battery case 10 can be effectively sealed. Since the rigid sealing member 30 has a high hardness, problems such as compression deformation failure can be avoided, so that the sealing performance of the rigid sealing member 30 between the terminal post 20 and the battery case 10 can be improved. A circumferential outer edge of a surface of the battery case 10 provided with the terminal post through hole 11 has a first endpoint 12 and a second endpoint 13. A center point 111 of the terminal post through hole 11 forms a first connecting line and a second connecting line respectively with the first endpoint 12 and the second endpoint 13. The first connecting line is substantially perpendicular to the second connecting line. A distance between the first endpoint 12 and a hole wall of the terminal post through hole 11 along an extending direction of the first connecting line is defined as a, a distance between the second endpoint 13 and the hole wall of the terminal post through hole 11 along an extending direction of the second connecting line is defined as b, and 0.9≤a/b≤1.1. Therefore, the distances between the first endpoint 12 and the second endpoint 13 and the rigid sealing member 30 are relatively uniform, to ensure that the battery case 10 can provide relatively balanced compression force to the rigid sealing member 30, thereby avoiding the risk of failure of the rigid sealing member 30 and improving the safety performance of the battery.

In one embodiment, the battery set is a battery module or a battery pack.

The battery module includes a plurality of batteries. The batteries may be prismatic batteries, and the battery module may further include end plates and side plates for fixing the plurality of batteries. The batteries may be cylindrical batteries, and the battery module may further include a tray. The batteries may be fixed on the tray.

The battery pack includes a plurality of batteries and a casing for fixing the plurality of batteries.

It should be noted that the battery pack may include a plurality of batteries, and the plurality of batteries are arranged in the casing. The plurality of batteries may be formed into a battery module and then be installed in the casing. Alternatively, the plurality of batteries may be directly arranged in the casing without being formed into a battery module, and the plurality of batteries are fixed by the casing.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the disclosure. The specification and embodiments are illustrative, and the real scope and spirit of the disclosure is defined by the appended claims.

It should be understood that the disclosure is not limited to the precise structures that have been described above and shown in the drawings, and various modifications and variations can be made without departing from the scope thereof. The scope of the disclosure is limited only by the appended claims.

## Claims

1. A battery, **characterized by** comprising:
a battery case (10), wherein a terminal post through hole (11) is arranged on the battery case (10);
a terminal post (20), wherein the terminal post (20) is arranged in the terminal post through hole (11); and
a rigid sealing member (30), wherein a glass transition temperature of the rigid sealing member (30) is 300°C to 600°C, and the rigid sealing member (30) is at least partially arranged in the terminal post through hole (11) to seal the terminal post (20) and the battery case (10),
wherein, a circumferential outer edge of a surface of the battery case (10) provided with the terminal post through hole (11) has a first endpoint (12) and a second endpoint (13), a center point (111) of the terminal post through hole (11) forms a first connecting line and a second connecting line respectively with the first endpoint (12) and the second endpoint (13), the first connecting line is substantially perpendicular to the second connecting line, a distance between the first endpoint (12) and a hole wall of the terminal post through hole (11) along an extending direction of the first connecting line is defined as a, a distance between the second endpoint (13) and the hole wall of the terminal post through hole (11) along an extending direction of the second connecting line is defined as b, and 0.9≤a/b≤1.1.

2. The battery according to claim 1, **characterized in that**, a is substantially equal to b.

3. The battery according to claim 1, **characterized in that**, the surface of the battery case (10) provided with the terminal post through hole (11) is a circular surface.

4. The battery according to claim 3, **characterized in that**, a distance between the center point (111) and the first endpoint (12) is defined as c, a thickness of the rigid sealing member (30) in the terminal post through hole (11) along the extending direction of the first connecting line is defined as d, and 3%≤d/c≤20%.

5. The battery according to claim 1, **characterized in that**, the rigid sealing member (30) comprises glass, ceramic, or glass-ceramic.

6. The battery according to claim 1, **characterized in that**, the rigid sealing member (30) is an annular sealing structure.

7. The battery according to claim 6, **characterized in that**, the rigid sealing member (30) comprises a circular sealing structure.

8. The battery according to any one of claims 1 to 7, **characterized in that**, the battery is a cylindrical battery.

9. The battery according to claim 8, **characterized in that**, a diameter of the cylindrical battery is greater than or equal to 20 mm.

10. The battery according to any one of claims 1 to 7, **characterized in that**, the battery case (10) comprises a first case member (14) and a second case member (15) connected to each other, the first case member (14) is a flat plate, the second case member (15) is formed with an accommodation cavity, and
the terminal post through hole (11) is arranged on the flat plate.

11. The battery according to any one of claims 1 to 7, **characterized in that**, the battery case (10) is a metal piece.

12. The battery according to any one of claims 1 to 7, **characterized in that**, the rigid sealing member (30) is hot-melted in the terminal post through hole (11).
